# EUROPÄISCHE PATENTANMELDUNG

(11) **EP 1 024 247 A1**
(43) Veröffentlichungstag der Anmeldung: **02.08.2000**
(21) Anmeldenummer: 00100287.2
(22) Anmeldetag: 20.01.2000
(51) Int. Cl.: E21B 10/46, E21B 10/36

(54) **Bohrwerkzeug**

(30) Priorität: 26.01.1999 DE 29901285 U
(71) Anmelder: PLICA WERKZEUGFABRIK AG, 8753 Mollis (CH)
(72) Erfinder: Jenny, Rudolf, 8753 Mollis (CH)
(74) Vertreter: Sties, Jochen, Dipl.-Ing.

(57) **Zusammenfassung**

Ein Bohrwerkzeug mit einem Schaft und einem Bohrkopf, der mit einem Schlitz versehen ist, in welchem eine Bohrplatte angeordnet ist, ist dadurch gekennzeichnet, daß die Bohrplatte in einer Draufsicht parallel zur Mittellängsachse (M) des Bohrwerkzeugs betrachtet eine rechteckige Grundform hat, wobei an zwei einander diametral gegenüberliegenden Ecken jeweils eine dreicksförmige Verbreiterung vorgesehen ist.

## Beschreibung

Die Erfindung betrifft ein Bohrwerkzeug mit einem Schaft und einem Bohrkopf, der mit einem Schlitz versehen ist, in welchem eine Bohrplatte angeordnet ist.

Solche Bohrwerkzeuge sind in den verschiedensten Ausgestaltungen bekannt. Durch die jeweilige Ausgestaltung der Bohrplatte können die Eigenschaften des Bohrwerkzeugs an spezielle Anforderungen angepaßt werden.

Die Erfindung schafft ein Bohrwerkzeug, bei dem die Bohrplatte so ausgestaltet ist, daß weitere Parameter zur Verfügung stehen, mit denen der optimale Kompromiß zwischen Bohrleistung und Standzeit des Bohrers in der gewünschten Weise eingestellt werden kann. Zu diesem Zweck ist bei einem Bohrer der eingangs genannten Art erfindungsgemäß vorgesehen, daß die Bohrplatte in einer Draufsicht parallel zur Mittellängsachse des Bohrwerkzeugs betrachtet eine rechteckige Grundform hat, wobei an zwei einander diametral gegenüberliegenden Ecken jeweils eine dreiecksförmige Verbreiterung vorgesehen ist. Die beiden Verbreiterungen mit dreiecksförmiger Grundform stellen eine Verstärkung der Bohrplatte an ihren radial außenliegenden Enden dar, die einen vergleichsweise geringen zusätzlichen Materialaufwand erfordert. Die Verbreiterung schafft den Platz zur Anbringungen von Nebenbrechkanten, welche die an der Bohrplatte ausgebildete Hauptbrechkante bei der Zertrümmerung des zu bohrenden Materials unterstützen. Die Nebenbrechkanten können hinsichtlich ihrer Anordnung und Ausgestaltung so gewählt werden, daß die gewünschte Leistung des Bohrwerkzeugs erhalten wird. Da im Bereich der Verbreiterung mehr Material zur Verfügung steht, ergibt sich außerdem ein geringerer Verschleiß im Bereich der Außenenden.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- die Figuren 1a bis 1c in einer ersten und einer zweiten Seitenansicht sowie einer Draufsicht ein Bohrwerkzeug gemäß einer ersten Ausführungsform der Erfindung;
- die Figuren 2a bis 2c in einer ersten und einer zweiten Seitenansicht sowie einer Draufsicht ein Bohrwerkzeug gemäß einer zweiten Ausführungsform der Erfindung;
- die Figuren 3a bis 3c in einer ersten und einer zweiten Seitenansicht sowie einer Draufsicht ein Bohrwerkzeug gemäß einer dritten Ausführungsform der Erfindung;
- die Figuren 4a bis 4c in einer ersten und einer zweiten Seitenansicht sowie einer Draufsicht ein Bohrwerkzeug gemäß einer vierten Ausführungsform der Erfindung; und
- die Figuren 5a bis 5c in einer ersten und einer zweiten Seitenansicht sowie einer Draufsicht ein Bohrwerkzeug gemäß einer fünften Ausführungsform der Erfindung.

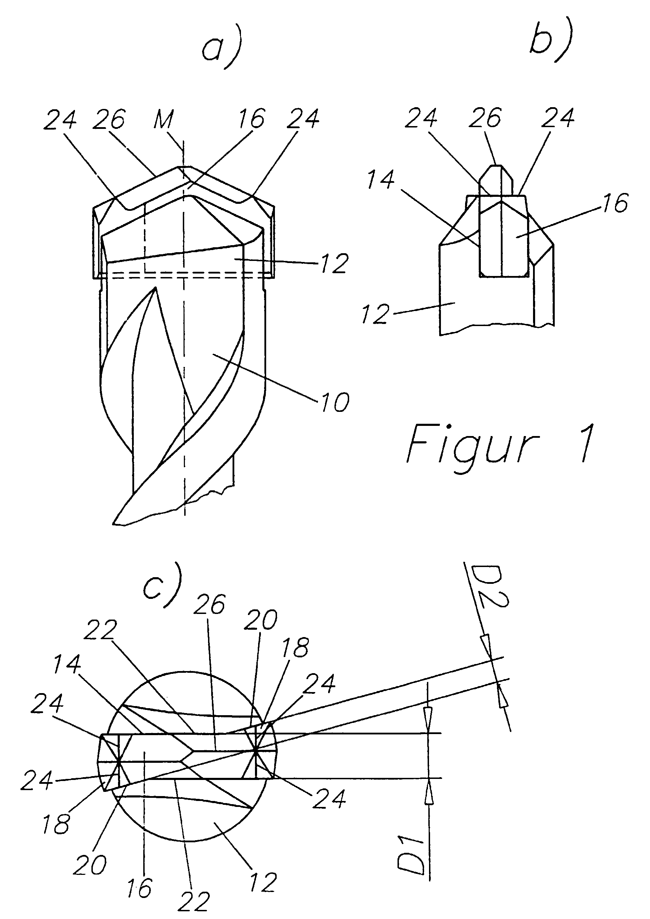

In den Figuren 1a bis 1c ist ein Bohrwerkzeug gemäß einer ersten Ausführungsform der Erfindung gezeigt. Das Bohrwerkzeug enthält einen Schaft 10, der zwei Wendeln aufweist, sowie einen Bohrkopf 12, in welchem ein Schlitz 14 ausgebildet ist, der eine Bohrplatte 16 aufnimmt.

Die Bohrplatte 16 hat in einer Ansicht parallel zu einer Mittellängsachse M des Bohrwerkzeugs eine allgemein rechteckige Grundfläche und steht an ihren radial außenliegenden Enden über den Außenumfang des Bohrkopfes 12 hervor. Abweichend von der rechteckigen Grundfläche ist am Rücken der Außenenden der Bohrplatte 16 jeweils eine Verbreiterung 18 vorgesehen, die in einer Draufsicht entlang der Mittellängsachse M des Bohrwerkzeugs eine dreiecksförmige Grundfläche hat. Anders ausgedrückt hat die Bohrplatte in einer Draufsicht eine Gestalt, die aus zwei Y-förmigen Grundkörpern, von denen einer um 180° gedreht wurde, zusammengesetzt ist.

Eine weitere Abweichung gegenüber der rechteckigen Grundfläche besteht darin, daß die Bohrplatte 16 an ihren radial außenliegenden, über den Außenumfang des Bohrkopfes 12 hinausstehenden Enden mit abgerundeten Stirnflächen ausgebildet ist.

Die Außenseiten 20 der Verbreiterungen 18 verlaufen parallel zueinander, wobei der Abstand D2 zwischen den von ihnen definierten Ebenen größer ist als der Abstand D1 zwischen den zueinander parallelen Außenflächen 22 der Bohrplatte 16. Hieraus folgt, daß der Schlitz 14 beispielsweise auf die folgende Weise erhalten werden kann: Zuerst wird mit einem Fräser der Breite D1 ein erster Schlitz in den Bohrkopf 12 gefräst. Anschließend wird das Bohrwerkzeug um einen vorbestimmten Winkel gedreht, und mit einem zweiten Fräser der Breite D2 wird ein weiterer Arbeitsgang vorgenommen, bei dem der zuerst gefräste Schlitz in den Bereichen erweitert wird, in denen später die Verbreiterungen 18 der Bohrplatte 16 zu liegen kommen.

Ein besonderer Vorteil, der sich aus der beschriebenen Geometrie der Bohrplatte 16 und des zugehörigen Schlitzes 14 ergibt, besteht darin, daß die Bohrplatte während der Herstellung des Bohrwerkzeuges nach dem Einsetzen in den Schlitz 14 nicht in radialer Richtung fixiert werden muß, da die beiden Verbreiterungen 18 verhindern, daß die Bohrplatte 16 seitlich aus dem Schlitz 14 herausrutscht. Die Bohrplatte muß also nicht mehr durch entweder einen Preßsitz oder durch Klemmhaftkerbung, also durch die Klemmwirkung von Kerben, die mit einem Meißel erzeugt werden und an der Bohrplatte angreifen, im Schlitz gehalten werden, wie dies bei Bohrwerkzeugen nach dem Stand der Technik erforderlich ist. Da die Bohrplatte 16 innerhalb des Schlitzes nicht zusätzlich fixiert werden muß, wird sie beim Einlöten aufgrund der wirkenden Kapillarkräfte automatisch in eine optimal zentrierte Lage einschwimmen. Auf diese Weise können sehr enge Toleranzen hinsichtlich der Anordnung der Bohrplatte 16 am Bohrkopf 12 eingehalten werden, ohne daß besondere Maßnahmen zur Zentrierung ergriffen werden müssen.

Im Bereich der Verdickungen 18 ist jeweils eine Nebenbrechkante 24 ausgebildet, welche die Hauptbrechkante 26 der Bohrplatte bei der Zertrümmerung des zu bohrenden Materials unterstützt. Die Nebenbrechkanten 24 erstrecken sich hier senkrecht zu den Außenflächen 22 durchgehend von der einen Seite der Bohrplatte 16 zur anderen und sind senkrecht zur Mittellängsachse M ausgerichtet. Die Hauptbrechkante 26 besteht aus zwei zueinander parallelen, jedoch gegeneinander verschobenen Teilstücken, die so angeordnet sind, daß jede Nebenbrechkante 24 in zwei etwa gleich lange Teilstücke unterteilt ist.

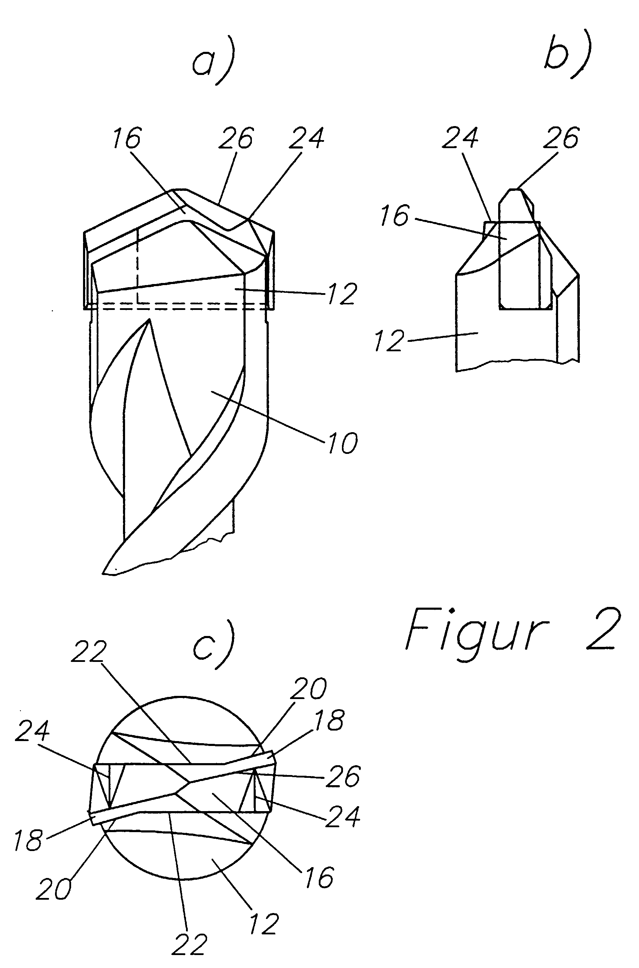

In den Figuren 2a bis 2c ist ein Bohrwerkzeug gemäß einer zweiten Ausführungsform gezeigt. Der Unterschied zum Bohrwerkzeug gemäß der ersten Ausführungsform besteht darin, daß die Hauptbrechkante 26 nicht parallel zu den Außenflächen 22 der Bohrplatte 16 ausgerichtet ist, sondern parallel zu den Außenseiten 20 der Verdickungen 18. Die beiden Nebenbrechkanten 24 sind nur auf der Brust der Bohrplatte 16 ausgebildet, wobei sie sich auch bei dieser Ausführungsform senkrecht zu den Außenflächen 22 der Bohrplatte 16 erstrecken.

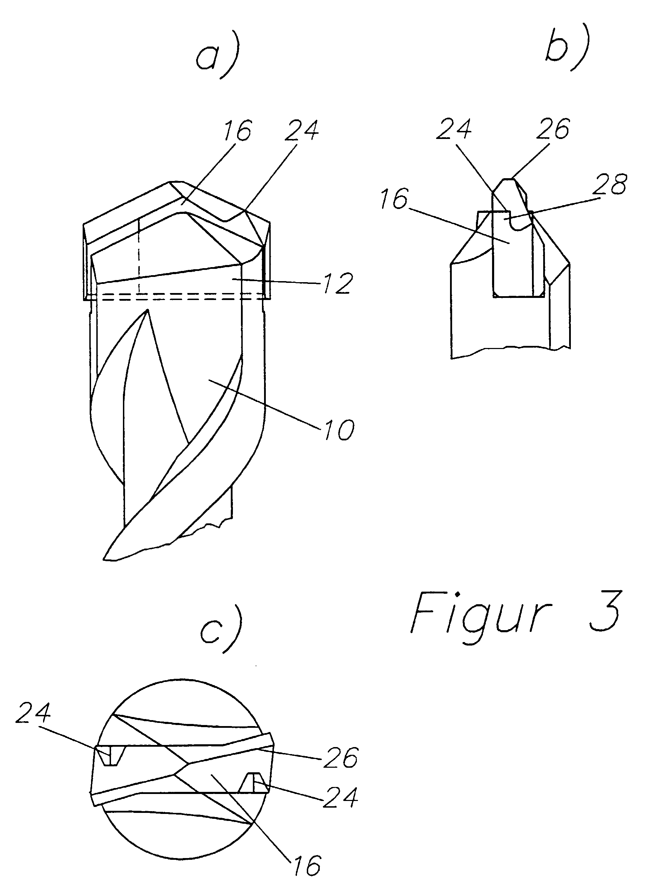

In Figur 3 ist ein Bohrwerkzeug gemäß einer dritten Ausführungsform der Erfindung gezeigt. Der Unterschied zum Bohrwerkzeug gemäß der zweiten Ausführungsform besteht darin, daß sich die Nebenbrechkanten 24 nicht bis hin zur Hauptbrechkante 26 erstrecken, sondern abgesetzt auf einem Vorsprung 28 ausgebildet sind.

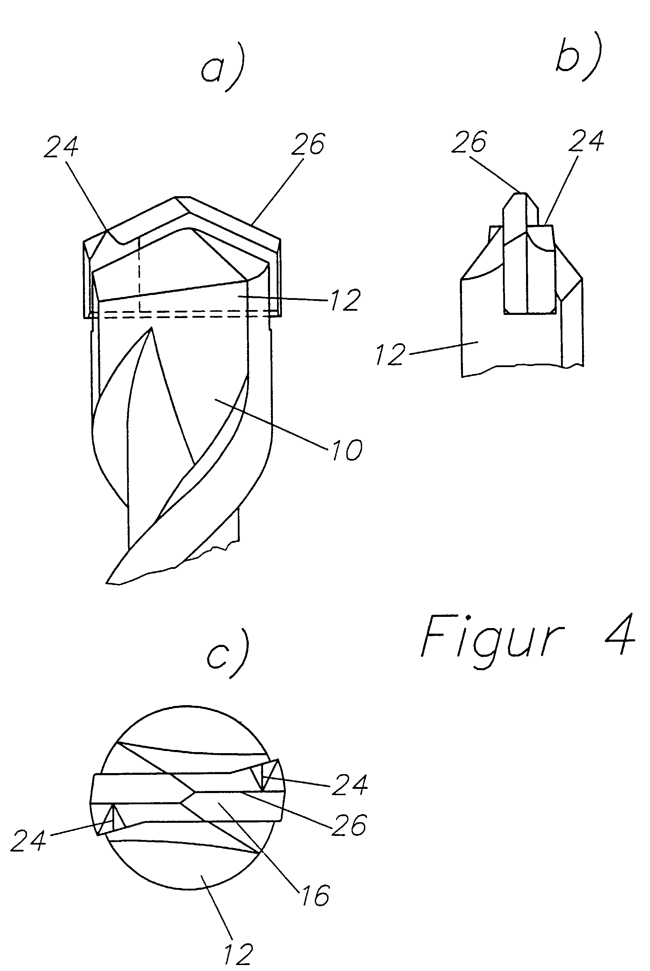

In Figur 4 ist ein Bohrwerkzeug gemäß einer vierten Ausführungsform gezeigt. Der Unterschied zur ersten Ausführungsform besteht hier darin, daß die Nebenbrechkanten 24 nur am Rücken der Bohrplatte 16 ausgebildet sind.

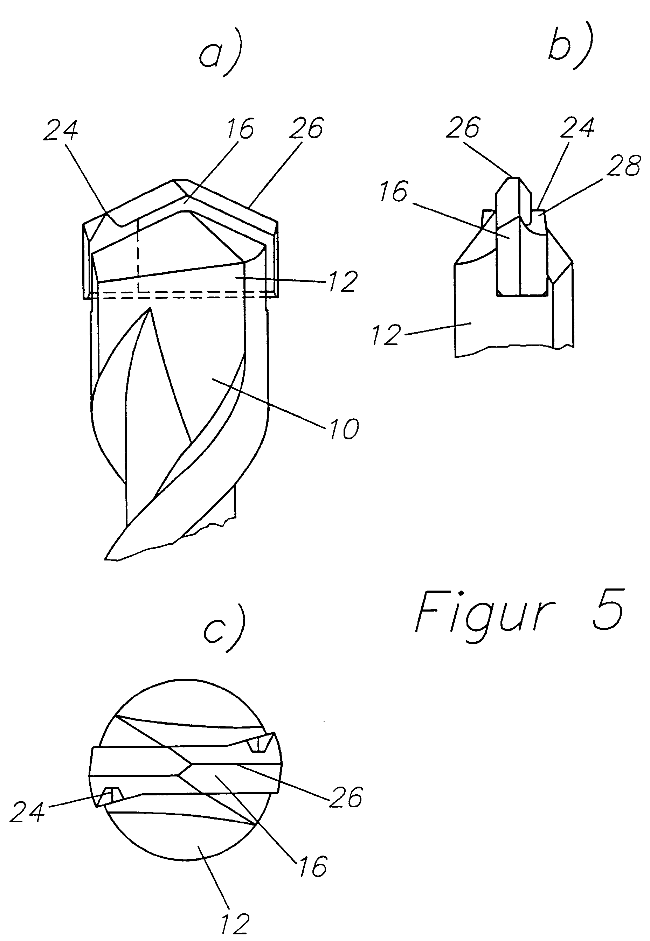

In Figur 5 ist ein Bohrwerkzeug gemäß einer fünften Ausführungsform der Erfindung gezeigt. Der Unterschied zur vierten Ausführungsform besteht darin, daß die Nebenbrechkanten 24 nicht durchgehend bis zur Hauptbrechkante 26 verlaufen, sondern ähnlich wie bei der dritten Ausführungsform abgesetzt auf einem Vorsprung 28 ausgebildet sind.

## Patentansprüche

1. Bohrwerkzeug mit einem Schaft (10) und einem Bohrkopf (12), der mit einem Schlitz (14) versehen ist, in welchem eine Bohrplatte (16) angeordnet ist,
dadurch gekennzeichnet, daß die Bohrplatte (16) in einer Draufsicht parallel zur Mittellängsachse (M) des Bohrwerkzeugs betrachtet eine rechteckige Grundform hat, wobei an zwei einander diametral gegenüberliegenden Ecken jeweils eine dreicksförmige Verbreiterung (18) vorgesehen ist.

2. Bohrwerkzeug nach Anspruch 1, dadurch gekennzeichnet, daß die längeren Außenkanten (20) der Verbreiterungen (18) zueinander parallel verlaufen.

3. Bohrwerkzeug nach Anspruch 2, dadurch gekennzeichnet, daß die Verlängerungen der zueinander parallelen Außenkanten (20) in einen Abstand (D2) voneinander verlaufen, der erheblich kleiner ist als die Dicke (D1) der Bohrplatte (16).

4. Bohrwerkzeug nach einem der Ansprüche 1 bis 3, dadurch gekennzeichnet, daß die Verbreiterungen (18) an der Brust der Bohrplatte (16) angeordnet ist.

5. Bohrwerkzeug nach einem der Ansprüche 1 bis 3, dadurch gekennzeichnet, daß die Verbreiterungen (18) am Rücken der Bohrplatte (16) angeordnet ist.

6. Bohrwerkzeug nach einem der vorhergehenden Ansprüche, dadurch gekennzeichnet, daß an der Brust der Bohrplatte (16) zwei Nebenbrechkanten (24) vorgesehen sind.

7. Bohrwerkzeug nach einem der vorhergehenden Ansprüche, dadurch gekennzeichnet, daß am Rücken der Bohrplatte (16) zwei Nebenbrechkanten (24) vorgesehen sind.

8. Bohrwerkzeug nach einem der Ansprüche 6 und 7, dadurch gekennzeichnet, daß die Nebenbrechkanten (24) rechtwinklig zur Hauptbrechkante (26) ausgerichtet sind.

9. Bohrwerkzeug nach einem der vorhergehenden Ansprüche, dadurch gekennzeichnet, daß zwischen der Wandung des Schlitzes (14) im Bohrkopf (12) und der Wandung der Bohrplatte (16) durchgehend eine Schicht aus Lotmaterial vorhanden ist.
